# EUROPEAN PATENT SPECIFICATION

(11) **EP 3 709 714 B1**
(45) Date of publication and mention of the grant of the patent: **04.05.2022**
(21) Application number: 18875765.2
(22) Date of filing: 10.05.2018
(51) Int. Cl.: H04W 36/14, H04W 36/00, H04W 36/22, H04W 36/32, H04W 36/38

(54) **METHOD AND DEVICE FOR TRIGGERING NETWORK SWITCHING, AND COMPUTER STORAGE MEDIUM**
VERFAHREN UND VORRICHTUNG ZUM AUSLÖSEN EINER NETZWERKVERMITTLUNG
PROCÉDÉ ET DISPOSITIF DE DÉCLENCHEMENT DE COMMUTATION DE RÉSEAU

(30) Priority: 13.11.2017 WO PCT/CN2017/110752; 26.04.2018 WO PCT/CN2018/084681
(43) Date of publication of application: 16.09.2020
(73) Proprietor: GUANGDONG OPPO MOBILE TELECOMMUNICATIONS CORP., LTD., Wusha, Chang'an Dongguan, Guangdong 523860 (CN)
(72) Inventor: TANG, Hai, Dongguan Guangdong 523860 (CN)
(74) Representative: RGTH
(86) International application number: PCT/CN2018/086390
(87) International publication number: WO 2019/091077

(56) References cited:
- EP-A1- 2 728 929
- CN-A- 101 925 142
- CN-A- 102 547 897
- CN-A- 103 391 588
- CN-A- 103 702 393
- US-A1- 2011 274 087
- US-A1- 2014 293 779
- "3rd Generation Partnership Project; Technical Specification Group Services and System Aspects; Procedures for the 5G System; Stage 2 (Release 15)", 3GPP STANDARD ; TECHNICAL SPECIFICATION ; 3GPP TS 23.502, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V1.2.0, 22 September 2017 (2017-09-22), pages 1-165, XP051337116, [retrieved on 2017-09-22]

## Description

### BACKGROUND

### Technical Field

The present invention relates to the field of mobile communication technologies, and in particular, to a method and an apparatus for triggering a network handover.

### Related Art

A 5th generation mobile communications (5G) network tends to be diversified, broadband, integrated, and intelligent. In the early development, the 5G network needs to be compatible with a fourth generation mobile communication (4G) network, so that an intelligent terminal can select an appropriate network for surfing the internet as needed.

The related art can be known from US20110274087A1, EP2728929A1, US20140293779A1 and "3rd Generation Partnership Project; Technical Specification Group Services and System Aspects; Procedures for the 5G System; Stage 2 (Release 15)", 3GPP STANDARD; TECHNICAL SPECIFICATION; 3GPP TS 23.502, 3GPP, vol. SA WG2 no. VI.2.0, 22 September 2017 (2017-09-22), pages 1-165, XP051337116.

However, in some scenarios, a handover between networks needs to be implemented. For example, after traffic used by a terminal on the 5G network reaches an upper limit, the 5G network is required to be handed over to the 4G network. At present, when a terminal needs to implement the handover between networks due to an event, the terminal often still resides on a current network. Accordingly, a policy needs to be used to trigger a network to perform a handover. For example, a network side controls, through adjusting a radio access technology frequency selection policy (RFSP), the terminal to perform the network handover at a moment after the event occurs. However, such handover mode causes the terminal to keep using the network to surf the internet after the event occurs (for example, after the traffic reaches the upper limit), resulting in additional network overheads and losing precise control of the traffic of the terminal.

### SUMMARY

The invention is defined in the appended set of claims.

In order to resolve the foregoing technical problems, embodiments of the present invention provide a method and an apparatus for triggering a network handover.

The features of the method and apparatus according to the present disclosure are defined in the independent claims, and the preferable features according to the present invention are defined in the dependent claims.

In technical solutions of the embodiments of the present invention, the handover request message is sent to the base station when the network element of the first core network determines that the handover condition is satisfied, the handover request message being used to trigger the base station to perform the network handover process or the session modification process of the terminal. According to the technical solutions of embodiments of the present invention, the network element of the first core network such as a Policy Control Function (PCF) network element or a Policy and Charging Rules Function (PCRF) network element can immediately trigger the base station to perform the network handover process of the terminal when it is determined that the handover condition is satisfied, avoiding additional network overheads caused by continuously surfing the internet on the original network by the terminal, and precisely controlling the traffic used by the terminal.

### BRIEF DESCRIPTION OF THE DRAWINGS

The accompanying drawings described herein are used for providing a further understanding of the present invention and constitute a part of this application. Exemplary embodiments of the present invention and the description thereof are used for explaining the present invention, and does not constitute any improper limitation on the present invention. In the figures:
FIG. 1 is a system architecture diagram of a 5G network according to an embodiment of the present invention;
FIG. 2 is a system architecture diagram of a 4G network according to an embodiment of the present invention;
FIG. 3 is a schematic flowchart I of a method for triggering a network handover according to an embodiment of the present invention;
FIG. 4 is a schematic flowchart II of a method for triggering a network handover according to an embodiment of the present invention;
FIG. 5 is a schematic flowchart III of a method for triggering a network handover according to an embodiment of the present invention;
FIG. 6 is a schematic flowchart IV of a method for triggering a network handover according to an embodiment of the present invention;
FIG. 7 is a schematic flowchart V of a method for triggering a network handover according to an embodiment of the present invention;
FIG. 8 is a schematic flowchart VI of a method for triggering a network handover according to an embodiment of the present invention;
FIG. 9 is a schematic flowchart VII of a method for triggering a network handover according to an embodiment of the present invention;
FIG. 10 is a schematic flowchart VIII of a method for triggering a network handover according to an embodiment of the present invention;
FIG. 11 is a schematic flowchart IX of a method for triggering a network handover according to an embodiment of the present invention;
FIG. 12 is a schematic structural diagram I of an apparatus for triggering a network handover according to an embodiment of the present invention;
FIG. 13 is a schematic structural diagram II of an apparatus for triggering a network handover according to an embodiment of the present invention;
FIG. 14 is a schematic structural diagram of a terminal according to an embodiment of the present invention;
FIG. 15 is a flowchart of transferring a handover request message according to an embodiment of the present invention;
FIG. 16 is a flowchart I of transferring an application data flow and/or session identification information according to an embodiment of the present invention; and
FIG. 17 is a flowchart II of transferring an application data flow and/or session identification information according to an embodiment of the present invention.

### DETAILED DESCRIPTION

To provide a thorough understanding of the features and technical contents of the embodiments of the present invention, the implementation of the embodiments of the present invention is described in detail below with reference to the accompanying drawings. The accompanying drawings are only used for reference and description but are not intended to limit the embodiments of the present invention.

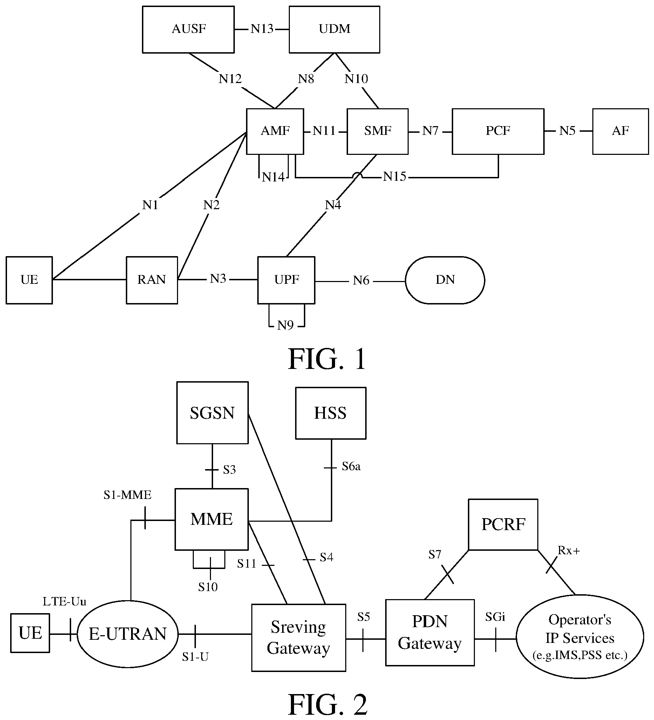

FIG. 1 is a system architecture diagram of a 5G network according to an embodiment of the present invention. As shown in FIG. 1, apparatuses involved in the 5G network include:
a user equipment (UE), a radio access network (RAN) apparatus, a user plane function (UPF) apparatus, a data network (DN) apparatus, a Core Access and Mobility Management Function (AMF) apparatus, a Session Management Function (SMF) apparatus, a Policy Control Function (PCF) apparatus, an Application Function (AF) apparatus, an Authentication Server Function (AUSF) apparatus, and a Unified Data Management (UDM) apparatus.

FIG. 2 is a system architecture diagram of a 4G network according to an embodiment of the present invention. As shown in FIG. 2, apparatuses involved in the 4G network include:
a user equipment (UE), an evolved universal terrestrial radio access network (E-UTRAN) apparatus, a Mobility Management Entity (MME) network element, a Serving GPRS Support Node (SGSN), a Home Subscriber Server (HSS), a serving gateway, a packet data network gateway (PDN Gateway), and a Policy and Charging Rules Function (PCRF) unit.

Examples in the foregoing FIG. 1 and FIG. 2 are only one network architecture example for implementing the embodiments of the present invention, and the embodiments of the present invention are not limited to the network structures in the foregoing FIG. 1 and FIG. 2.

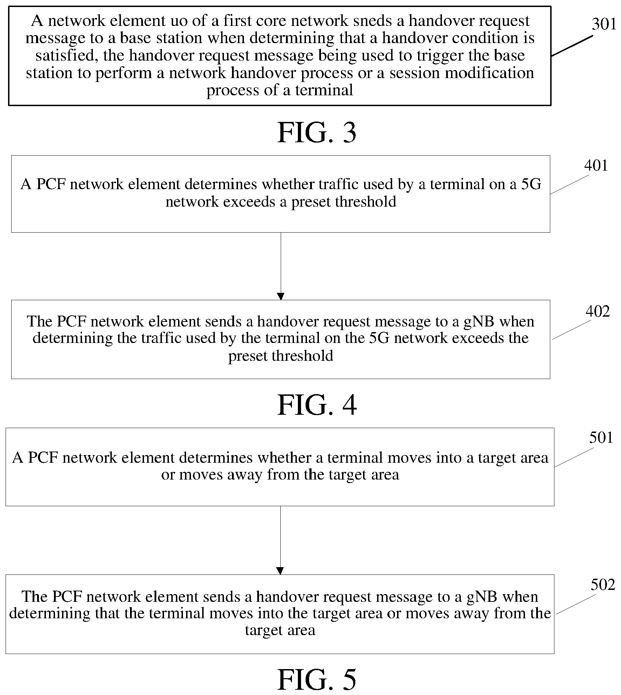

FIG. 3 is a schematic flowchart I of a method for triggering a network handover according to an embodiment of the present invention. As shown in FIG. 3, the method for triggering the network handover includes the following step:
Step 301: A handover request message is sent to a base station when a network element of a first core network determines that a handover condition is satisfied, the handover request message being used to trigger a base station to perform a network handover process or a session modification process of a terminal.

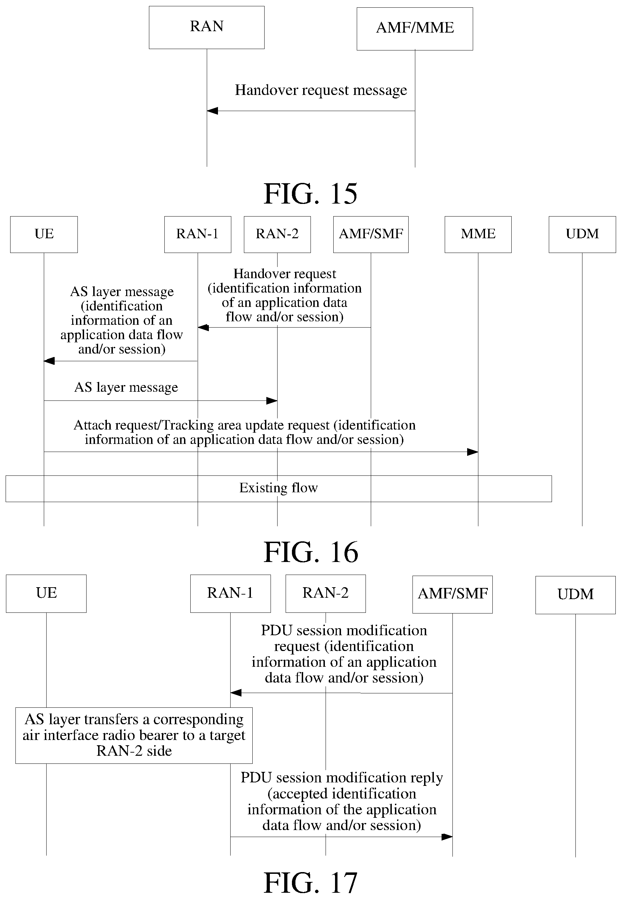

During specific implementation, the network element of the first core network sends the handover request message to the base station through network elements of other core networks. That the network element of the first core network is a PCF network element is used as an example. The PCF sends the handover request message to the base station through an AMF/MME network element. Referring to FIG. 15, the AMF/MME network element sends the handover request message to a RAN device (a corresponding base station).

The network element of the first core network determines that the handover condition is satisfied in the following but being not limited to the following manners.
(1) When the network element of the first core network determines that traffic used by the terminal on a first network exceeds a preset threshold, a handover request message is sent to the base station.

In particular, the network element of the first core network receives a first trigger message sent by a network element of a second core network, the first trigger message being used to indicate that the traffic used by the terminal on the first network exceeds a preset threshold.

(2) When the network element of the first core network determines that the terminal is using one or more specific applications on the first network, a handover request message is sent to the base station.

In an implementation, the specific applications include at least one of the following:
an application that is not supported by the first network, an application that occupies an amount of resources of the first network that exceeds a preset value, an application that is not used on the first network required in subscription information, and an application that is in a low-priority transfer data packet in the subscription information, the low-priority transfer data packet meaning that a priority of the transfer data packet is lower than or equal to a preset priority.

Subscription information includes attribute information corresponding to a plurality of applications, the attribute information including at least one of the following: feature information, service priority information, and importance degree information.

The network element of the first core network selects, according to a current running application, a service priority corresponding to an application with the highest importance degree, and determines, according to the service priority, whether the network handover process or the session modification process is triggered.

Alternatively, the first network element of the first core network calculates, according to one or more current running applications, a sum of importance degrees corresponding to each service priority, and determines, according to the sum of the importance degrees of the service priorities, whether the network handover process or the session modification process is triggered.

During specific implementation, one subscription information list may be added to the subscription information, including feature information corresponding to the plurality of applications, service priority information, and importance degree information (some information herein is optional, such as the importance degree information), and the like. The network element determines, based on the subscription information list, whether handover is triggered, one example thereof being shown in Table 1.

**Table 1**

| | | | |
|---|---|---|---|
| Application-1 | Feature information 1 | Service priority [NR-5GC, LTE-5GC, LTE-EPC] | Importance degree 12 |
| Application-2 | Feature information 2 | Service priority [LTE-5GC] | Importance degree 5 |
| ... | ... | ... | ... |

The importance degree is a range, such as 1-15, and the service priority may be one value or more values.

A network side device selects, according to a running application, a service priority corresponding to an application with the highest importance degree, and determines, according to the service priority, whether a network handover or session modification is triggered. Alternatively,
the network side device also calculates, according to one or more current running applications, the sum of importance degrees corresponding to service priorities. For example, the current running applications include the following three:

**Table 2**

| | | | |
|---|---|---|---|
| Application-1 | Feature information 1 | Service priority [NR-5GC] | Importance degree 12 |
| Application-2 | Feature information 2 | Service priority [NR-5GC] | Importance degree 5 |
| Application-3 | Feature information 3 | Service priority [LTE-EPC] | Importance degree 8 |
| ... | ... | ... | ... |

A sum of importance degrees of [NR-5GC] calculated by the network side device is 12+5 = 17, and a sum of importance degrees of [LTE-EPC] is 8. Therefore, if the UE only supports single registration, [NR-5GC] is selected as a current network for working. If the UE supports dual registration, a data flow of the application-3 may be handed over to LTE-EPC, and data flows of the application-1 and the application-2 are still transferred to NR-5GC.

The foregoing rules may be used by the PCF apparatus, or may be delivered by the PCF apparatus or the UDM apparatus to other network elements such as an SMF apparatus for use.

(3) When the network element of the first core network determines that the terminal moves into a target area or moves away from the target area, the handover request message is sent to the base station.

(4) When the network element of the first core network receives a second trigger message, the handover request message is sent to the base station.

In an implementation, the network element of the first core network receives a handover request message sent by a network element of a third core network. In this case, the network element of the first core network sends the handover request message to the base station.

In another implementation, the network element of the first core network receives a service request message sent by a terminal, the service request message being used to indicate occurrence or a request handover of specific services (such as an emergency call service and a voice call service). In this case, the network element of the first core network sends the handover request message to the base station.

In the foregoing solutions, the handover request message is used to instruct the base station to perform a handover process that some or all of data flows of the terminal on a user plane are handed over from the first network to a second network.

In an implementation, the handover request message includes at least one of the following indication information:
indication information based on an inter-system interface handover;
indication information based on redirection without an inter-system interface;
indication information of session establishment/request modification; or
indication information for handing over a specified application data flow and/or session.

Further, if the handover request message includes the indication information for handing over a specified application data flow and/or session, the handover request message further includes:
indication information for handing over, to a second base station that is connected to the second core network, the specified data flow and/or session from a current first base station that is connected to the first core network; or
indication information for handing over, to the second base station that is connected to the first core network, the specified data flow and/or session from the current first base station that is connected to the first core network.

Referring to FIG. 16, a network element of a first core network is an AMF network element or an SMF network element, and an access network corresponding to a base station is RAN-1. RAN-1 and AMF/SMF belong to a first network (namely a 5G network), and RAN-2 and MME belong to a second network (namely a 4G network). A handover request message sent by the AMF/SMF network element to a RAN-1 network element carries identification information (a flow id list and/or a session id list) of a specified application data flow and/or session, a connected target RAT = RAN-2, and a target core network is an EPC. An air interface message, namely an AS layer message (such as, an RRC connection reconfiguration message or an RRC connection release message) sent by the RAN-1 network element to the UE carries identification information (a flow id list and/or a session id list) of the specified application data flow and/or session. Afterwards, the UE sends the AS layer message to a RAN-2 network element and sends a session establishment message (such as an attach request message or a location update message) to an MME, and the session establishment message carries the identification information (a flow id list and/or a session id list) of the specified application data flow and/or the session, and may further carry other indication information. Next, a second network side device starts establishing a corresponding application data flow and/or session.

Referring to FIG. 17, a network element of a first core network is an AMF network element or an SMF network element, and an access network corresponding to a base station is RAN-1. Both RAN-1 and RAN-2 belong to a first network (namely a 5G network). A handover request message sent by the AMF/SMF network element to a RAN-1 network element carries identification information (a flow id list and/or a session id list) of a specified application data flow and/or session, a connected target of RAT = RAN-2, and a target core network is 5GC. The RAN-1 network element interacts with a UE (through an RRC Connection Reconfiguration message) at an air interface, hands over, to a target RAN-2 side, an air interface radio bearer corresponding to a specified flow/PDU Session, and then replies to a flow id list and/or a PDU session id list that are/is shifted by the AMF/SMF network element in the core network.

In the foregoing solutions, the handover request message carries a network handover type, the network handover type including: an access type handover or an access system handover.

The embodiments of the present invention are proposed as follows based on a 5G network architecture.

FIG. 4 is a schematic flowchart II of a method for triggering a network handover according to an embodiment of the present invention. As shown in FIG. 4, the method for triggering the network handover includes the following steps.

Step 401: A PCF network element determines whether traffic used by a terminal on a 5G network exceeds a preset threshold.

In an implementation, the PCF network element receives a first trigger message sent by an AMF network element/an SMF network element, the first trigger message being used to indicate that the traffic used by the terminal on the 5G network exceeds the preset threshold.

Step 402: A handover request message is sent to a gNB when the PCF network element determines that the traffic used by the terminal on the 5G network exceeds the preset threshold.

In the embodiment of the present invention, the handover request message is used to indicate that the gNB performs a handover process that the terminal is handed over from the 5G network to a 4G network.

In an implementation, the handover request message carries a network handover type, such as a RAT handover or an EPS handover.

FIG. 5 is a schematic flowchart III of a method for triggering a network handover according to an embodiment of the present invention. As shown in FIG. 5, the method for triggering the network handover includes the following steps:
Step 501: A PCF network element determines whether a terminal moves into a target area or moves away from the target area;
Step 502: A handover request message is sent to a gNB when the PCF network element determines that the terminal moves into the target area or moves away from the target area.

In the embodiment of the present invention, the handover request message is used to indicate that the gNB performs a handover process that the terminal is handed over from a 5G network to a 4G network.

In an implementation, the handover request message carries a network handover type, such as a RAT handover or an EPS handover.

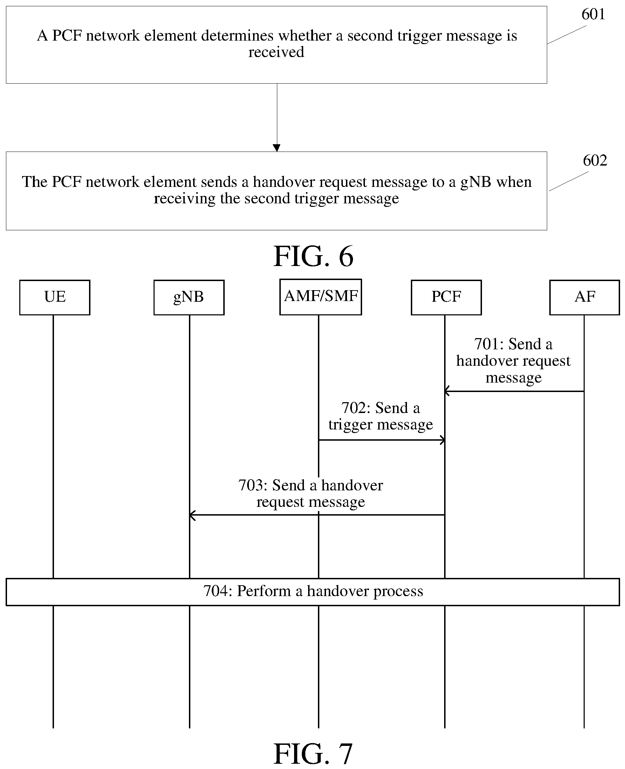

FIG. 6 is a schematic flowchart IV of a method for triggering a network handover according to an embodiment of the present invention. As shown in FIG. 6, the method for triggering the network handover includes the following steps.

Step 601: A PCF network element determines whether a second trigger message is received.

In an implementation, if the PCF network element receives a handover request message sent by an AF network element, it is determined that the second trigger message is received.

The handover request message herein sent by the AF network element may also carry a network handover type, for example, a RAT handover or an EPS handover.

Step 602: The PCF network element sends the handover request message to a gNB when receiving the second trigger message.

In an implementation, the handover request message carries a network handover type, such as a RAT handover or an EPS handover.

In the embodiment of the present invention, the handover request message is used to indicate that the gNB performs a handover process that the terminal is handed over from a 5G network to a 4G network.

FIG. 7 is a schematic flowchart V of a method for triggering a network handover according to an embodiment of the present invention. As shown in FIG. 7, the method for triggering the network handover includes the following steps.

Step 701: An AF network element sends a handover request message to a PCF network element.

The handover request message herein carries a network handover type, for example, a RAT handover or an EPS handover.

Step 702: An AMF/SMF network element sends a trigger message to the PCF network element, the trigger message being used to indicate that traffic used by a terminal on a 5G network exceeds a preset threshold.

In the foregoing solutions, a sequence of performing step 701 and step 702 is not limited.

Step 703: The PCF network element sends a handover request message to a gNB.

The handover request message herein carries a network handover type, for example, a RAT handover or an EPS handover.

Step 704: A UE performs a handover process with network elements at a network side.

According to the technical solutions of the embodiments of the present invention, the PCF network element can immediately trigger the UE to return to the 4G network when learning that the traffic used by the UE on the 5G network reaches an upper limit.

Embodiments of the present invention are proposed as follows based on a 4G network architecture.

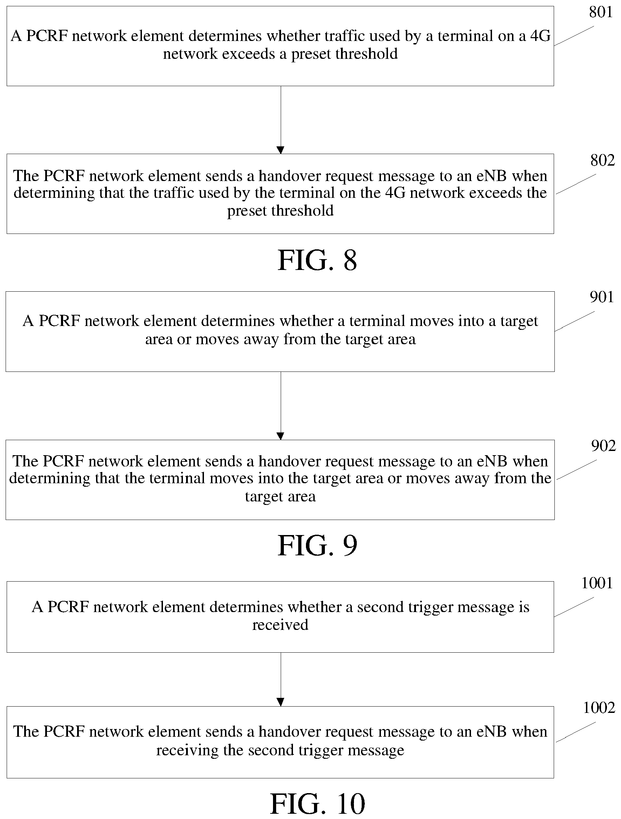

FIG. 8 is a schematic flowchart VI of a method for triggering a network handover according to an embodiment of the present invention. As shown in FIG. 8, the method for triggering the network handover includes the following steps.

Step 801: A PCRF network element determines whether traffic used by a terminal on a 4G network exceeds a preset threshold.

In an implementation, the PCF network element receives a first trigger message sent by an MME network element/PDN-GW network element, the first trigger message being used to indicate that the traffic used by the terminal on the 4G network exceeds the preset threshold.

Step 802: A handover request message is sent to an eNB when the PCRF network element determines that the traffic used by the terminal on the 4G network exceeds the preset threshold.

In the embodiment of the present invention, the handover request message is used to instruct the eNB to perform a handover process that the terminal is handed over from the 4G network to a 3G network.

FIG. 9 is a schematic flowchart VII of a method for triggering a network handover according to an embodiment of the present invention. As shown in FIG. 9, the method for triggering the network handover includes the following steps:
Step 901: A PCRF network element determines whether a terminal moves into a target area or moves away from the target area.
Step 902: A handover request message is sent to an eNB when the PCRF network element determines that the terminal moves into a target area or moves away from the target area.

In the embodiment of the present invention, the handover request message is used to instruct the eNB to perform a handover process that the terminal is handed over from the 4G network to a 3G network.

FIG. 10 is a schematic flowchart VIII of a method for triggering a network handover according to an embodiment of the present invention. As shown in FIG. 10, the method for triggering the network handover includes the following steps.

Step 1001: A PCRF network element determines whether a second trigger message is received.

In an implementation, if the PCRF network element receives a handover request message sent by an AF network element, it is determined that the second trigger message is received.

Step 1002: The PCRF network element sends a handover request message to an NB when receiving the second trigger message.

In the embodiment of the present invention, the handover request message is used to instruct the eNB to perform a handover process that the terminal is handed over from a 4G network to a 3G network.

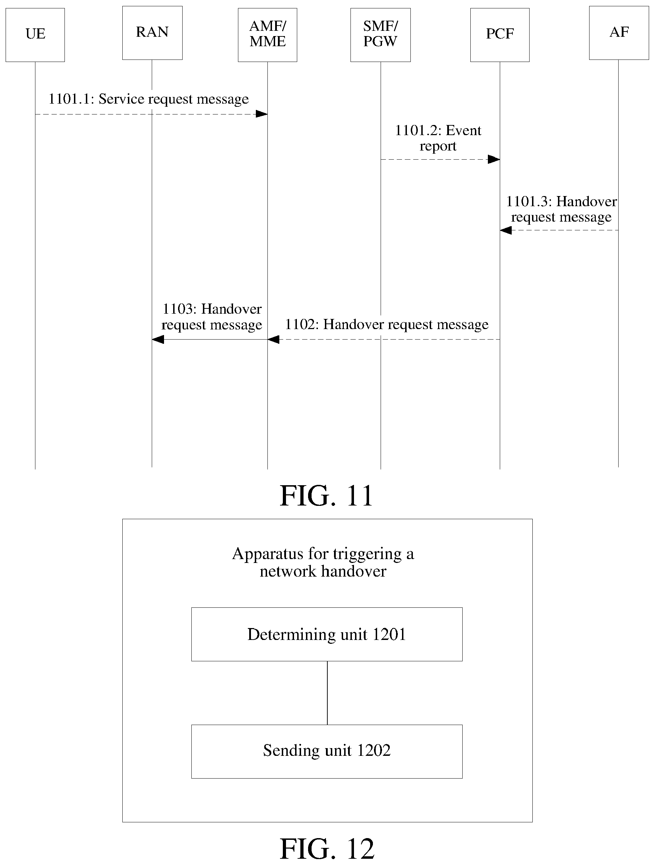

FIG. 11 is a schematic flowchart IX of a method for triggering a network handover according to an embodiment of the present invention. As shown in FIG. 11, the method for triggering the network handover includes the following steps.

Step 1101.1: A UE sends a service request message to an AMF/MME network element.

The service request message herein reported by the UE may be implemented through a current service request message, which can indicate a service type that is requested, such as an emergency call service and a voice call service.

Step 1101.2: An SMF network element/a PGW network element reports an event to a PCF.

The reported event herein includes: usage detection and application detection, etc.

Step 1101.3: An AF network element sends a handover request message to a PCF network element.

Herein, the handover request message, as a third party trigger request, sent by the AF network element, is actively triggered by a third party server.

The foregoing step 1101.1, step 1101.2, and step 1101.3 all can trigger the handover process, which may be performed independently, or may be performed in parallel.

Step 1102: The PCF network element sends a handover request message to an AMF/MME network element.

Step 1103: The AMF/MME network element sends a handover request message to a RAN network element, to trigger a handover process.

In the foregoing solutions, that the terminal is handed over from the 5G network to the 4G network or handed over from the 4G network to the 3G network is only used as an example. In an actual application, the network handover is not limited thereto. Any network handover implemented based on an idea of technical solutions of the embodiments of the present invention shall fall within the protection scope of the embodiments of the present invention.

FIG. 12 is a schematic structural diagram I of an apparatus for triggering a network handover according to an embodiment of the present invention. As shown in FIG. 12, the apparatus includes:
a determining unit 1201, configured to determine whether a handover condition is satisfied; and
a sending unit 1202, configured to send a handover request message to a base station when the handover condition is satisfied, the handover request message being used to trigger the base station to perform a network handover process or a session modification process of a terminal.

Those skilled in the art should understand that, for implementation functions of the units in the apparatus for triggering the network handover as shown in FIG. 12, reference may be made to related description of the foregoing method for triggering the network handover. Functions of the units in the apparatus for triggering the network handover as shown in FIG. 12 may be implemented through a program running on a processor, or may be implemented through a specific logic circuit.

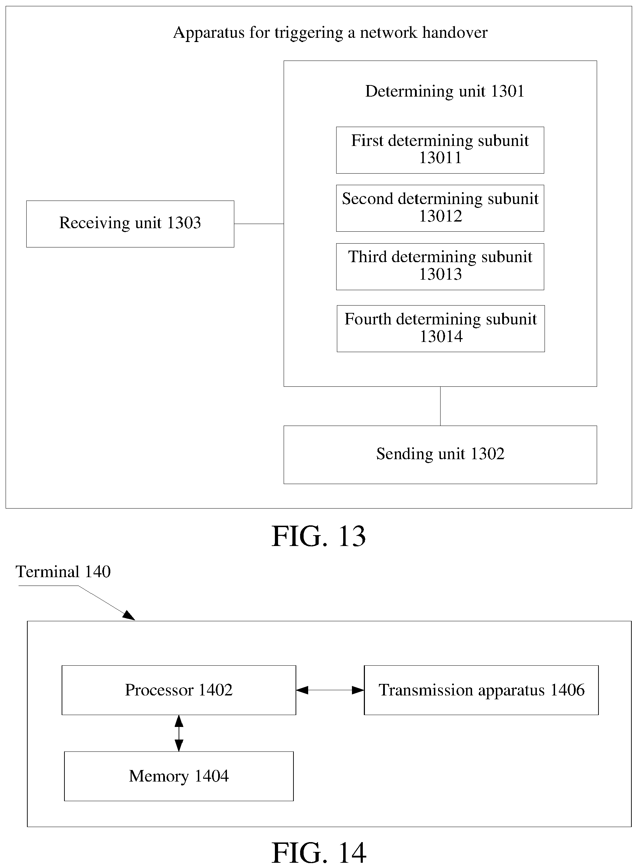

FIG. 13 is a schematic structural diagram II of an apparatus for triggering a network handover according to an embodiment of the present invention. As shown in FIG. 13, the apparatus includes:
a determining unit 1301, configured to determine whether a handover condition is satisfied; and
a sending unit 1302, configured to send a handover request message to a base station when the handover condition is satisfied, the handover request message being used to trigger the base station to perform a network handover process or a session modification process of a terminal.

In an implementation, the determining unit 1301 includes: a first determining subunit 13011, configured to determine whether traffic used by the terminal on a first network exceeds a preset threshold; and
the sending unit 1302 is specifically configured to send a handover request message to the base station when it is determined that the traffic used by the terminal on the first network exceeds the preset threshold.

In the foregoing solutions, the apparatus further includes: a receiving unit 1303, configured to receive a first trigger message sent by a network element of a second core network, the first trigger message being used to indicate that the traffic used by the terminal on the first network exceeds the preset threshold; and
the first determining subunit 13011 is specifically configured to determine, based on the first trigger message, whether the traffic used by the terminal on the first network exceeds the preset threshold.

In an implementation, the determining unit 1301 includes: a fourth determining subunit 13014, configured to determine whether the terminal is using one or more specific applications on the first network; and
the sending unit 1302 is specifically configured to send the handover request message to the base station when it is determined that the terminal is using one or more specific applications on the first network.

In an implementation, the specific applications include at least one of the following:
an application that is not supported by the first network, an application that occupies an amount of resources of the first network that exceeds a preset value, an application that is not used on the first network required in subscription information, and an application that is in a low-priority transfer data packet in the subscription information, the low-priority transfer data packet meaning that a priority of the transfer data packet is lower than or equal to a preset priority.

In an implementation, subscription information includes attribute information corresponding to a plurality of applications, the attribute information including at least one of the following: feature information, service priority information, and importance degree information.

A service priority corresponding to an application with the highest importance degree is selected according to a current running application, and it is determined, according to the service priority, whether the network handover process or the session modification process is triggered.

Alternatively, a sum of importance degrees corresponding to each service priorities is calculated according to one or more current running applications, and it is determined, according to the sum of importance degrees of service priorities, whether the network handover process or the session modification process is triggered.

In an implementation, the determining unit 1301 includes: a second determining subunit 13012, configured to determine whether the terminal moves into a target area or moves away from the target area.

The sending unit 1302 is specifically configured to send the handover request message to the base station when it is determined that the terminal moves into the target area or moves away from the target area, the handover request message being used to trigger the base station to perform the network handover process or the session modification process of the terminal.

In an implementation, the determining unit 1301 includes: a third determining subunit 13013, configured to determine whether a second trigger message is received; and
the sending unit 1302 is specifically configured to send the handover request message to the base station when the second trigger message is received, the handover request message being used to trigger the base station to perform the network handover process or the session modification process of the terminal.

In an implementation, the third determining subunit 13013 is specifically configured to determine whether a handover request message sent by a network element of a third core network is received.

In another implementation, the third determining subunit 13013 is specifically configured to determine whether a service request message sent by the terminal is received, the service request message being used to indicate occurrence or a request handover of a specific service.

In an implementation of the present invention, that the handover request message is used to trigger the base station to perform the network handover process or the session modification process of the terminal means that:
the handover request message is used to instruct the base station to perform a handover process that some or all of data flows of the terminal on a user plane are handed over from the first network to a second network.

In an implementation, the handover request message includes at least one of the following indication information:
indication information based on an inter-system interface handover;
indication information of session establishment/request modification;
indication information based on redirection without an inter-system interface; or
indication information for handing over a specified application data flow and/or session.

Further, if the handover request message includes the indication information for handing over a specified application data flow and/or session, the handover request message further includes:
indication information for handing over, to a second base station that is connected to the second core network, the specified data flow and/or session from a current first base station that is connected to the first core network; or
indication information for handing over, to the second base station that is connected to the first core network, the specified data flow and/or session from the current first base station that is connected to the first core network.

In an implementation of the present invention, the handover request message carries a network handover type, the network handover type including: an access type handover or an access system handover.

Those skilled in the art should understand that, for implementation functions of the units in the apparatus for triggering the network handover as shown in FIG. 13, reference may be made to related description of the foregoing method for triggering the network handover. Functions of the units in the apparatus for triggering the network handover as shown in FIG. 13 may be implemented through a program running on a processor, or may be implemented through a specific logic circuit.

If the foregoing apparatus for triggering the network handover in the embodiment of the present invention is implemented in a form of a software function module and is sold or used as an independent product, the apparatus may also be stored in one computer storage medium. Based on such understanding, the technical solutions in the embodiments of the present invention or a part thereof that makes a contribution to the prior art may be essentially embodied in a form of a software product. The computer software product is stored in a storage medium, including several instructions to enable one computer device (which may be a personal computer, a server, or a network device, etc.) to perform all or some of the methods in the embodiments of the present invention. The foregoing storage medium includes: any medium that can store program code, such as a USB flash disk, a mobile hard disk, a read-only memory (ROM), a magnetic disk, or an optical disk. In this way, the embodiments of the present invention are not limited to any combination of specific hardware and software.

Correspondingly, an embodiment of the present invention further provides a computer storage medium in which a computer executable instruction is stored. The computer executable instruction implements, when executed by a processor, the foregoing method for triggering a network handover in the embodiment of the present invention.

FIG. 14 is a schematic structural diagram of a terminal according to an embodiment of the present invention. As shown in FIG. 14, a terminal 140 may include one or more (only one shown in the figure) processors 1402 (the processors 1402 may include but not limited to a processing apparatus such as a microcontroller unit (MCU) or a field programmable gate array (FPGA)), a memory 1404 for storing data, and a transmission apparatus 1406 for communication. Those skilled in the art may understand that, the structure shown in FIG. 14 is merely an example and does not constitute a limitation on the structure of the foregoing electronic apparatus. For example, the terminal 140 may further include more or less components than those shown in FIG. 14, or has a configuration different from that shown in FIG. 14.

The memory 1404 may be configured to store a software program of application software and a module, such as a program instruction/module corresponding to the method for triggering the network handover in the embodiment of the present invention, and the processor 1402 executes various functional applications and data processing through running the software program and the module stored in the memory 1404, to implement the foregoing method. The memory 1404 may include a high-speed random memory, and may further include a non-volatile memory such as one or more magnetic storage apparatuses, a flash memory, or other non-volatile solid state memories. In some embodiments, the memory 1404 may further include memories that are remotely disposed relative to the processor 1402, and these remote memories may be connected to the terminal 140 via a network. Examples of the foregoing networks include, but are not limited to, an internet, an intranet, a local area network, a mobile communication network, and a combination thereof.

The transmission apparatus 1406 is configured to receive or send data via a network. A specific example of the foregoing network may include a wireless network provided by a communication supplier of the terminal 140. In an example, the transmission apparatus 1406 includes one network interface controller (NIC), which can be connected to other network devices through a base station, thereby communicating with the Internet. In an example, the transmission apparatus 1406 may be a radio frequency (RF) module, which is configured to communicate with the internet in a wireless mode.

The technical solutions set forth in the embodiments of the present invention may be arbitrarily combined with each other without conflicts.

In the several embodiments provided in the present invention, it should be understood that the disclosed method and intelligent device may be implemented in other manners. The described device embodiment is merely an example. For example, the unit division is merely logical function division and may be other division during actual implementation. For example, a plurality of units or components may be combined or integrated into another system, or some features may be ignored or not performed. In addition, the displayed or discussed mutual couplings or direct couplings or communication connections between the components may be implemented through some interfaces. The indirect couplings or communication connections between the devices or units may be implemented in electronic, mechanical, or other forms. The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments. In addition, functional units in the embodiments of the present invention may all be integrated into one second processing unit, or each of the units may be implemented as an independent unit, or two or more units may be integrated into one unit. The integrated unit may be implemented in a form of hardware, or may be implemented in a form of hardware in addition to a software functional unit.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention.

## Claims

1. A method for triggering a network handover, comprising:
sending, by a network element of a first core network when determining that a handover condition is satisfied, a first handover request message to a base station of a first network, the first handover request message being used to trigger the base station to perform a network handover process or a session modification process of a terminal (301), wherein the first core network is comprised in the first network;
wherein the sending, by the network element of the
first core network when determining that the handover condition is satisfied, the first handover request message to the base station of the first network (301) comprises:
sending, by the network element of the first core network, the first handover request message to the base station when receiving a second trigger message;
**characterized in that** receiving, by the network element of the first core network, a second trigger message comprises:
receiving, by the network element of the first core network, a service request message sent by the terminal, the service request message being used to indicate occurrence of a specific service.

2. The method for triggering the network handover according to claim 1, wherein the first handover request message is used to trigger the base station to perform the network handover process or the session modification process of the terminal means that:
the first handover request message is used to instruct the base station to perform a handover process that some or all of data flows of the terminal on a user plane are handed over from the first network to a second network.

3. The method for triggering the network handover according to claim 2, wherein the first handover request message carries a network handover type, the network handover type comprising: an access type handover or an access system handover.

4. The method for triggering the network handover according to claim 3, wherein the network handover type is a RAT handover or an EPS handover.

5. The method for triggering the network handover according to claim 1 or 2, wherein when the handover request message comprises indication information for handing over a specified application data flow and/or session, the handover request message further comprises:
indication information for handing over, to a second base station that is connected to the second core network, the specified data flow and/or session from a current first base station that is connected to the first core network; or
indication information for handing over, to the second base station that is connected to the first core network, the specified data flow and/or session from the current first base station that is connected to the first core network.

6. A network element, comprised in a first core network, for triggering a network handover, comprising:
a determining unit (1201), configured to determine whether a handover condition is satisfied; and
a sending unit (1202), configured to send a first handover request message to a base station of a first network when the handover condition is satisfied, the first handover request message being used to trigger the base station to perform a network handover process or a session modification process of a terminal, wherein the first core network is comprised in the first network;
wherein the determining unit (1201) comprises: a third determining subunit (13013), configured to determine whether a second trigger message is received; and
the sending unit (1202) is specifically configured to send the first handover request message to the base station when the second trigger message is received;
**characterized in that** the third determining subunit (13013) is specifically configured to determine whether a service request message sent by the terminal is received, the service request message being used to indicate occurrence or a request handover of a specific service.

7. The network element for triggering the network handover according to claim 6, wherein the first handover request message is used to trigger the base station to perform the network handover process or the session modification process of the terminal means that:
the first handover request message is used to instruct the base station to perform a handover process that some or all of data flows of the terminal on a user plane are handed over from the first network to a second network.

8. The network element for triggering the network handover according to claim 7, wherein the first handover request message carries a network handover type, the network handover type comprising an access type handover or an access system handover.

9. The network element for triggering the network handover according to claim 8, wherein the network handover type is a RAT handover or an EPS handover.

10. The apparatus for triggering the network handover according to claim 6 or 7, wherein if the handover request message comprises the indication information for handing over the specified application data flow and/or session, the handover request message further comprises:
indication information for handing over, to a second base station that is connected to the second core network, the specified data flow and/or session from a current first base station that is connected to the first core network; or
indication information for handing over, to the second base station that is connected to the first core network, the specified data flow and/or session from the current first base station that is connected to the first core network.

## Patentansprüche

1. Verfahren zum Auslösen einer Netzwerkübergabe, umfassend:
Senden, wenn ermittelt wird, dass eine Übergabebedingung erfüllt ist, einer ersten Übergabeanforderungsnachricht von einem Netzwerkelement eines ersten Kernnetzwerks zu einer Basisstation eines ersten Netzwerks, wobei die erste Übergabeanforderungsnachricht verwendet wird, um in der Basisstation ein Durchführen eines Netzwerkübergabeprozesses oder eines Sitzungsmodifikationsprozesses eines Endgeräts (301) auszulösen, wobei das erste Kernnetzwerk in dem ersten Netzwerk enthalten ist;
wobei das Senden, wenn ermittelt wird, dass die Übergabebedingung erfüllt ist, der ersten Übergabeanforderungsnachricht von dem Netzwerkelement des ersten Kernnetzwerks zu der Basisstation des ersten Netzwerks (301), umfasst:
Senden der ersten Übergabeanforderungsnachricht von dem Netzwerkelement des ersten Kernnetzwerks zu der Basisstation, wenn eine zweite Auslösenachricht empfangen wird;
**dadurch gekennzeichnet, dass**, das Empfangen einer zweiten Auslösenachricht in dem Netzwerkelement des ersten Kernnetzwerks umfasst:
Empfangen, in dem Netzwerkelement des ersten Kernnetzwerks, einer Dienstanforderungsnachricht, die von dem Endgerät gesendet wird, wobei die Dienstanforderungsnachricht verwendet wird, um ein Vorhandensein eines spezifischen Dienstes anzuzeigen.

2. Verfahren zum Auslösen einer Netzwerkübergabe nach Anspruch 1, wobei das Verwenden der ersten Übergabeanforderungsnachricht, um in der Basisstation ein Durchführen eines Netzwerkübergabeprozesses oder eines Sitzungsmodifikationsprozesses des Endgeräts auszulösen, bedeutet, dass:
die erste Übergabeanforderungsnachricht verwendet wird, um die Basisstation anzuweisen, einen Übergabeprozess durchzuführen, sodass ein Teil der oder alle Datenflüsse des Endgeräts in einer Benutzerebene von dem ersten Netzwerk an ein zweites Netzwerk übergeben werden.

3. Verfahren zum Auslösen einer Netzwerkübergabe nach Anspruch 2, wobei die erste Übergabeanforderungsnachricht einen Netzwerkübergabetyp mitführt, wobei der Netzwerkübergabetyp umfasst: eine Zugangstypübergabe oder eine Zugangssystemübergabe.

4. Verfahren zum Auslösen einer Netzwerkübergabe nach Anspruch 3, wobei der Netzwerkübergabetyp eine RAT-Übergabe oder eine EPS-Übergabe ist.

5. Verfahren zum Auslösen einer Netzwerkübergabe nach Anspruch 1 oder 2, wobei, wenn die Übergabeanforderungsnachricht Anzeigeinformationen zum Übergeben eines spezifizierten Anwendungsdatenflusses und/oder einer spezifizierten Anwendungssitzung umfasst, die Übergabeanforderungsnachricht außerdem umfasst:
Anzeigeinformationen zum Übergeben des spezifizierten Datenflusses und/oder der spezifizierten Sitzung von einer aktuellen ersten Basisstation, die mit dem ersten Kernnetzwerk verbunden ist an eine zweite Basisstation, die mit dem zweiten Kernnetzwerk verbunden ist; oder
Anzeigeinformationen zum Übergeben des spezifizierten Datenflusses und/oder der spezifizierten Sitzung von der aktuellen ersten Basisstation, die mit dem ersten Kernnetzwerk verbunden ist, an eine zweite Basisstation, die mit dem ersten Kernnetzwerk verbunden ist.

6. Netzwerkelement, das in einem ersten Kernnetzwerk enthalten ist, zum Auslösen einer Netzwerkübergabe, umfassend:
eine Ermittlungseinheit (1201), die konfiguriert ist zum Ermitteln, ob eine Übergabebedingung erfüllt ist; und
eine Sendeeinheit (1202), die konfiguriert ist zum Senden einer ersten Übergabeanforderungsnachricht zu einer Basisstation eines ersten Netzwerks, wenn die Übergabebedingung erfüllt ist, wobei die erste Übergabeanforderungsnachricht verwendet wird, um in der Basisstation ein Durchführen eines Netzwerkübergabeprozesses oder eines Sitzungsmodifikationsprozesses eines Endgeräts auszulösen, wobei das erste Kernnetzwerk in dem ersten Netzwerk enthalten ist;
wobei die Ermittlungseinheit (1201) umfasst: eine dritte Ermittlungsteileinheit (13013), die konfiguriert ist zum Ermitteln, ob eine zweite Auslösenachricht empfangen wird; und
wobei die Sendeeinheit (1202) insbesondere konfiguriert ist zum Senden der ersten Übergabeanforderungsnachricht zu der Basisstation, wenn die zweite Auslösenachricht empfangen wird;
**dadurch gekennzeichnet, dass**, die dritte Ermittlungsteileinheit (13013) insbesondere konfiguriert ist zum Ermitteln, ob eine Dienstanforderungsnachricht empfangen wird, die von dem Endgerät gesendet wird, wobei die Dienstanforderungsnachricht verwendet wird, um ein Vorhandensein oder eine Anforderungsübergabe eines spezifischen Dienstes anzuzeigen.

7. Netzwerkelement zum Auslösen der Netzwerkübergabe nach Anspruch 6, wobei das Verwenden der ersten Übergabeanforderungsnachricht, um in der Basisstation ein Durchführen des Netzwerkübergabeprozesses oder des Sitzungsmodifikationsprozesses des Endgeräts auszulösen, bedeutet, dass:
die erste Übergabeanforderungsnachricht verwendet wird, um die Basisstation anzuweisen, einen Übergabeprozess durchzuführen, sodass ein Teil der oder alle Datenflüsse des Endgeräts in einer Benutzerebene von dem ersten Netzwerk an das zweite Netzwerk übergeben werden.

8. Netzwerkelement zum Auslösen der Netzwerkübergabe nach Anspruch 7, wobei die erste Übergabeanforderungsnachricht einen Netzwerkübergabetyp mitführt, wobei der Netzwerkübergabetyp eine Zugangstypübergabe oder eine Zugangssystemübergabe umfasst.

9. Netzwerkelement zum Auslösen der Netzwerkübergabe nach Anspruch 8, wobei der Netzwerkübergabetyp eine RAT-Übergabe oder eine EPS-Übergabe ist.

10. Vorrichtung zum Auslösen einer Netzwerkübergabe nach Anspruch 6 oder 7, wobei, wenn die Übergabeanforderungsnachricht Anzeigeinformationen zum Übergeben des spezifizierten Anwendungsdatenflusses und/oder der spezifizierten Anwendungssitzung umfasst, die Übergabeanforderungsnachricht außerdem umfasst:
Anzeigeinformationen zum Übergeben des spezifizierten Datenflusses und/oder der spezifizierten Sitzung von einer aktuellen ersten Basisstation, die mit dem ersten Kernnetzwerk verbunden ist an eine zweite Basisstation, die mit dem zweiten Kernnetzwerk verbunden ist; oder
Anzeigeinformationen zum Übergeben des spezifizierten Datenflusses und/oder der spezifizierten Sitzung von der aktuellen ersten Basisstation, die mit dem ersten Kernnetzwerk verbunden ist, an eine zweite Basisstation, die mit dem ersten Kernnetzwerk verbunden ist.

## Revendications

1. Procédé pour déclencher un transfert de réseau, comprenant :
l'envoi, par un élément de réseau d'un premier réseau central lorsqu'il est déterminé qu'une condition de transfert est satisfaite, d'un premier message de demande de transfert à une station de base d'un premier réseau, le premier message de demande de transfert étant utilisé pour déclencher l'exécution par la station de base d'un processus de transfert de réseau ou d'un processus de modification de session d'un terminal (301),
le premier réseau central étant compris dans le premier réseau ;
l'envoi, par l'élément de réseau du premier réseau central lorsqu'il est déterminé que la condition de transfert est satisfaite, du premier message de demande de transfert à la station de base du premier réseau (301) comprenant :
l'envoi, par l'élément de réseau du premier réseau central, du premier message de demande de transfert à la station de base lors de la réception d'un second message de déclenchement ;
**caractérisé en ce que** la réception, par l'élément de réseau du premier réseau central, d'un second message de déclenchement comprend :
la réception, par l'élément de réseau du premier réseau central, d'un message de demande de service envoyé par le terminal, le message de demande de service étant utilisé pour indiquer l'apparition d'un service spécifique.

2. Procédé de déclenchement du transfert de réseau selon la revendication 1, le fait que le premier message de demande de transfert est utilisé pour déclencher la réalisation par la station de base du processus de transfert de réseau ou du processus de modification de session du terminal signifiant que :
le premier message de demande de transfert est utilisé pour demander à la station de base de réaliser un processus de transfert selon lequel une partie ou la totalité des flux de données du terminal sur un plan utilisateur sont transférés du premier réseau à un deuxième réseau.

3. Procédé de déclenchement du transfert de réseau selon la revendication 2, le premier message de demande de transfert portant un type de transfert de réseau, le type de transfert de réseau comprenant : un transfert de type d'accès ou un transfert de système d'accès.

4. Procédé de déclenchement du transfert de réseau selon la revendication 3, le type de transfert de réseau étant un transfert RAT ou un transfert EPS.

5. Procédé de déclenchement du transfert de réseau selon la revendication 1 ou 2, lorsque le message de demande de transfert comprend des informations d'indication pour transférer un flux de données d'application et/ou une session spécifiés, le message de demande de transfert comprenant en outre :
des informations d'indication pour transférer, à une deuxième station de base qui est connectée au deuxième réseau central, le flux de données et/ou la session spécifiés à partir d'une première station de base actuelle qui est connectée au premier réseau central ; ou
des informations d'indication pour transférer, à la seconde station de base qui est connectée au premier réseau central, le flux de données et/ou la session spécifiés à partir de la première station de base actuelle qui est connectée au premier réseau central.

6. Élément de réseau, compris dans un premier réseau central, pour déclencher un transfert de réseau, comprenant :
une unité de détermination (1201), configurée pour déterminer si une condition de transfert est satisfaite ; et
une unité d'envoi (1202), configurée pour envoyer un premier message de demande de transfert à une station de base d'un premier réseau lorsque la condition de transfert est satisfaite, le premier message de demande de transfert étant utilisé pour déclencher la réalisation par la station de base d'un processus de transfert de réseau ou d'un processus de modification de session d'un terminal, le premier réseau central étant compris dans le premier réseau ;
l'unité de détermination (1201) comprenant : une troisième sous-unité de détermination (13013), configurée pour déterminer si un deuxième message de déclenchement est reçu ; et
l'unité d'envoi (1202) étant spécifiquement configurée pour envoyer le premier message de demande de transfert à la station de base lorsque le deuxième message de déclenchement est reçu ;
**caractérisé en ce que** la troisième sous-unité de détermination (13013) est spécifiquement configurée pour déterminer si un message de demande de service envoyé par le terminal est reçu, le message de demande de service étant utilisé pour indiquer l'apparition ou une demande de transfert d'un service spécifique.

7. Élément de réseau pour déclencher le transfert de réseau selon la revendication 6, le fait que le premier message de demande de transfert est utilisé pour déclencher la réalisation par la station de base du processus de transfert de réseau ou du processus de modification de session du terminal signifiant que :
le premier message de demande de transfert est utilisé pour ordonner à la station de base de réaliser un processus de transfert selon lequel une partie ou la totalité des flux de données du terminal sur un plan utilisateur sont transférés du premier réseau à un deuxième réseau.

8. Élément de réseau pour déclencher le transfert de réseau selon la revendication 7, le premier message de demande de transfert portant un type de transfert de réseau, le type de transfert de réseau comprenant un transfert de type d'accès ou un transfert de système d'accès.

9. Élément de réseau pour déclencher le transfert de réseau selon la revendication 8, le type de transfert de réseau étant un transfert RAT ou un transfert EPS.

10. Dispositif de déclenchement du transfert de réseau selon la revendication 6 ou 7, si le message de demande de transfert comprend les informations d'indication pour transférer le flux de données d'application et/ou la session spécifiés, le message de demande de transfert comprenant en outre :
des informations d'indication pour transférer, à une deuxième station de base qui est connectée au deuxième réseau central, le flux de données et/ou la session spécifiés à partir d'une première station de base actuelle qui est connectée au premier réseau central ; ou
des informations d'indication pour transférer, à la seconde station de base qui est connectée au premier réseau central, le flux de données et/ou la session spécifiés à partir de la première station de base actuelle qui est connectée au premier réseau central.
